# FASCICULE DE BREVET EUROPEEN

(11) **EP 2 902 927 B1**
(45) Date de publication et mention de la délivrance du brevet: **21.08.2019**
(21) Numéro de dépôt: 15152104.4
(22) Date de dépôt: 22.01.2015
(51) Int. Cl.: G06N 99/00

(54) **Procédé et dispositif d'étiquetage d'au moins un objet multimédia**
Verfahren und Vorrichtung zum Etikettieren mindestens eines Multimedia-Objekts
Method and device for labelling at least one multimedia object

(30) Priorité: 31.01.2014 FR 1400268
(43) Date de publication de la demande: 05.08.2015
(73) Titulaire: Orange, 75015 Paris (FR)
(72) Inventeur: Roulliere, Stéphane, 35000 Rennes (FR)
(74) Mandataire: Cabinet Beau de Loménie

(56) Documents cités:
- US-A1- 2011 320 454
- SIGURBJÖRNSSON B ET AL: "Flickr tag recommendation based on collective knowledge", WWW '08 PROCEEDING OF THE 17TH INTERNATIONAL CONFERENCE ON WORLD WIDE WEB, APRIL 21-25, 2008, BEIJING, CHINA, ACM, , no. 17TH 21 avril 2008 (2008-04-21), pages 327-336, XP002629896, ISBN: 1-60558-085-2 Extrait de l'Internet: URL:http://portal.acm.org/citation.cfm?doi d=1367497.1367542 [extrait le 2011-03-24]
- MENG WANG ET AL: "Assistive tagging", ACM COMPUTING SURVEYS, ACM, NEW YORK, NY, US, US, vol. 44, no. 4, 7 septembre 2012 (2012-09-07), pages 1-24, XP058007587, ISSN: 0360-0300, DOI: 10.1145/2333112.2333120

## Description

### Arrière-plan de l'invention

L'invention se rapporte au domaine général des télécommunications et de la manipulation d'objets multimédia, tels que notamment des images, des photographies, des fichiers audio ou vidéo, etc.

Elle concerne plus particulièrement l'étiquetage d'objets multimédia appartenant à un utilisateur, c'est-à-dire l'association d'une étiquette (ou « tag » en anglais) ou d'une annotation telle un mot clé à ces objets multimédia, en vue notamment de faciliter leur classement et/ou leur recherche dans un espace de stockage, leur partage avec d'autres utilisateurs, etc. Cette étiquette peut être notamment relative au contenu à proprement parler de l'objet multimédia (ex. pour une photographie, le nom d'une personne représentée sur la photographie ou d'un monument), à ses conditions d'acquisition (ex. lieu ou date d'acquisition), etc.

Il existe dans l'état actuel de la technique trois catégories de méthodes d'étiquetage, à savoir les méthodes d'étiquetage manuelles, automatiques et semi-automatiques.

L'étiquetage manuel d'un objet multimédia par un utilisateur, tel qu'une photographie par exemple, consiste en la saisie directement par l'utilisateur, manuellement, vocalement ou par tout autre moyen, d'un ou de plusieurs mots clés destinés à être associés à l'objet multimédia considéré. Un tel étiquetage manuel est en pratique assez peu utilisé, car il peut s'avérer laborieux et consommateur en temps, notamment lorsqu'un grand nombre d'objets multimédia doit être traité par l'utilisateur. Par ailleurs, l'utilisateur n'a pas nécessairement, au moment où il souhaite étiqueter un objet multimédia, la connaissance ou le souvenir du contexte d'acquisition de cet objet qui pourrait lui permettre d'étiqueter de manière plus objective et efficace ce dernier.

Les méthodes d'étiquetage automatiques sont basées sur l'analyse à proprement parler de l'objet multimédia, et en particulier de son contenu (ex. reconnaissance de formes telles que des visages) et/ou de son contexte d'acquisition. Ces méthodes sont toutefois assez peu robustes et ne présentent des résultats satisfaisants (autrement dit, un étiquetage pertinent pour l'utilisateur) que pour des catégories limitées d'étiquettes (ex. pour une photographie, attribution automatique d'étiquettes de type portrait/foule, jour/nuit, coucher de soleil, etc.).

Enfin, les méthodes d'étiquetage semi-automatiques consistent à suggérer à l'utilisateur un ensemble d'étiquettes ayant une forte probabilité d'être pertinentes pour ce dernier ou pour l'objet multimédia qu'il souhaite étiqueter. Cet ensemble d'étiquettes est déterminé en analysant les étiquetages passés réalisés par l'utilisateur ou par d'autres utilisateurs dans un contexte d'acquisition de l'objet multimédia similaire. Une telle technique d'étiquetage semi-automatique est décrite par exemple dans le document WO 2008/097706. L'article "Assistive Tagging: A Survey of Multimedia Tagging with Human-Computer Joint Exploration" (Wang et al.) présente l'état de l'art dans le domaine de l'étiquetage multimédia. L'article "Flickr Tag Recommendation based on Collective Knowledge" (Sigurbjörnsson et al.) vise a augmenter le nombre d'étiquettes présentées a l'utilisateur par cooccurrence.

Toutefois, l'ensemble des étiquettes ainsi généré et proposé à l'utilisateur est souvent assez peu pertinent et beaucoup trop bruité pour envisager l'usage d'une telle méthode semi-automatique dans le contexte d'un étiquetage d'objets multimédia privés.

Il existe donc un besoin d'une méthode d'étiquetage qui ne présente pas les inconvénients de l'état de la technique et facilite l'étiquetage par un utilisateur d'un ou plusieurs objets multimédia.

### Objet et résumé de l'invention

L'invention répond notamment à ce besoin en proposant un procédé d'étiquetage d'au moins un objet multimédia d'un utilisateur comprenant :
- une étape de détermination d'un premier ensemble d'étiquettes pour ledit au moins un objet multimédia en appliquant au moins une règle de sélection prédéterminée ;
- une étape d'obtention d'un deuxième ensemble d'étiquettes pour ledit au moins un objet multimédia à partir du premier ensemble d'étiquettes dans lequel au moins une étiquette est un hyperonyme d'une étiquette du premier ensemble ;
- une étape de fourniture du deuxième ensemble d'étiquettes à l'utilisateur ;
- si une étiquette est sélectionnée par l'utilisateur :
   ∘ une étape d'étiquetage dudit au moins un objet multimédia avec l'étiquette sélectionnée par l'utilisateur ; et
   ∘ une étape de mise à jour du deuxième ensemble d'étiquettes en fonction de l'étiquette sélectionnée par l'utilisateur ;
   les étapes de fourniture, et le cas échéant d'étiquetage et de mise à jour étant répétées avec le deuxième ensemble d'étiquettes mis à jour.

Corrélativement, l'invention vise aussi un dispositif d'étiquetage d'au moins un objet multimédia d'un utilisateur comprenant :
- un module de détermination d'un premier ensemble d'étiquettes pour ledit au moins un objet multimédia apte à appliquer au moins une règle de sélection prédéterminée ;
- un module d'obtention d'un deuxième ensemble d'étiquettes pour ledit au moins un objet multimédia à partir du premier ensemble d'étiquettes dans lequel au moins une étiquette est un hyperonyme d'une étiquette du premier ensemble ;
- un module de fourniture du deuxième ensemble d'étiquettes à l'utilisateur ;
- des modules, activés si une étiquette est sélectionnée par l'utilisateur, d'étiquetage dudit au moins un objet multimédia avec l'étiquette sélectionnée par l'utilisateur et de mise à jour du deuxième ensemble d'étiquettes en fonction de cette étiquette ;
et dans lequel les modules de fourniture, et le cas échéant d'étiquetage et de mise à jour sont utilisés de manière répétée avec le deuxième ensemble d'étiquettes mis à jour.

Le procédé d'étiquetage selon l'invention s'appuie ainsi sur une méthode d'étiquetage semi-automatique suggérant un premier ensemble d'étiquettes pour le ou les objets multimédia à étiqueter, suivie d'un filtrage des étiquettes du premier ensemble de sorte à présenter à l'utilisateur un ensemble d'étiquettes moins bruité et plus adapté (deuxième ensemble d'étiquettes au sens de l'invention). A cet effet, le filtrage réalisé conformément à l'invention propose avantageusement des étiquettes d'un niveau de généralité sémantique supérieur à celui des étiquettes du premier ensemble afin de tester auprès de l'utilisateur la pertinence des étiquettes suggérées.

Ces étiquettes d'un niveau sémantique supérieur sont aussi appelées des hyperonymes des étiquettes du premier ensemble. De façon connue en soi, un hyperonyme se dit d'un terme générique dont le sens inclut celui d'autres termes. A titre d'exemple, pour un objet multimédia à étiqueter de type photographie, si le premier ensemble d'étiquettes suggère une étiquette « Eglise St Mélaine » pour étiqueter l'objet après analyse par exemple de son contexte d'acquisition, le filtrage réalisé par l'invention consiste à proposer à l'utilisateur une étiquette hyperonyme de l'étiquette « Eglise St Mélaine » telle que « Monuments ». Inversement, l'étiquette « Eglise St Mélaine » est une étiquette dite méronyme de l'étiquette « Monuments ». De façon connue, la méronymie est une relation partitive hiérarchisée (relation de partie à un tout) : un mot méronyme A d'un mot B est un mot dont le signifié désigne une sous-partie du signifié du mot B.

Le recours à ces étiquettes hyperonymes permet d'identifier rapidement si les étiquettes déterminées automatiquement par application de règles de suggestion prédéterminées sont pertinentes pour l'objet multimédia à étiqueter. Ainsi, par exemple, si la photographie à étiqueter a été prise à proximité de l'Eglise St Mélaine mais représente le visage d'une personne A, l'utilisateur peut vouloir associer à cette photographie une étiquette indiquant le nom A de cette personne et non l'étiquette « Eglise St Mélaine » qui lui semble moins pertinente. Ainsi, selon cet exemple, si l'on considère des règles de sélection suggérant à partir d'une analyse du contenu de la photographie et de son contexte d'acquisition les étiquettes « Eglise St Mélaine » et « A » dans le premier ensemble d'étiquettes, le deuxième ensemble d'étiquettes proposé à l'utilisateur contient par exemple les étiquettes « Monuments » et « Noms », hyperonymes respectivement des étiquettes « Eglise St Mélaine » et « A ».

Le filtrage proposé par l'invention combiné à la prise en compte de la sélection par l'utilisateur d'une étiquette (parmi le deuxième ensemble d'étiquettes qui lui est présenté ou proposée spontanément par l'utilisateur) permet à l'utilisateur d'affiner progressivement son annotation. Le processus itératif qui est mis en oeuvre permet avantageusement d'aboutir rapidement à une annotation pertinente et satisfaisante pour l'utilisateur. Le procédé d'étiquetage proposé par l'invention permet ainsi d'assister l'utilisateur dans le choix des mots clés destinés à étiqueter ses objets multimédia, tout en limitant la taille des ensembles d'étiquettes qui lui sont suggérés et les itérations nécessaires pour aboutir à une sélection d'étiquettes satisfaisante.

La mise à jour du deuxième ensemble d'étiquettes à partir de l'étiquette sélectionnée par l'utilisateur peut être mise en oeuvre de différentes façons afin de permettre à l'utilisateur de converger rapidement vers un étiquetage adapté de son ou ses objets multimédia.

Ainsi, dans un mode particulier de réalisation, l'étape de mise à jour du deuxième ensemble peut comprendre le remplacement de l'étiquette sélectionnée par au moins une étiquette méronyme de l'étiquette sélectionnée.

Dans l'exemple illustratif évoqué précédemment, si l'étiquette « Monuments » est sélectionnée par l'utilisateur, l'étape de mise à jour du deuxième ensemble consiste par exemple à remplacer l'étiquette « Monuments » par différents noms de monuments identifiés à proximité de l'endroit de prise de vue de la photographie, à savoir « Eglise St Mélaine », mais également d'autres monuments susceptibles d'avoir été identifiés par consultation par exemple d'une base de données contenant les points d'intérêts répertoriés en fonction d'une localisation géographique.

Le processus itératif proposé par l'invention visant à proposer dans un premier temps des hyperonymes des étiquettes du premier ensemble puis dans un second temps seulement, des méronymes de l'étiquette sélectionnée permet ainsi de proposer rapidement à l'utilisateur un ensemble d'étiquettes adaptées. On limite le bruit dans la sélection d'étiquettes suggérées à l'utilisateur tout en lui permettant d'avancer et d'affiner son étiquetage.

Dans un autre mode de réalisation, l'étape de mise à jour du deuxième ensemble peut comprendre l'ajout d'au moins une étiquette liée par une règle de cooccurrence à l'étiquette sélectionnée.

Par cooccurrence, on entend ici la présence simultanée de deux ou plusieurs mots ou ensembles de mots distincts pour étiqueter un objet multimédia. Ainsi, deux étiquettes sont liées par une règle de cooccurrence si elles ont été utilisées simultanément un nombre prédéterminé de fois (paramétrable par l'utilisateur ou un opérateur du dispositif d'étiquetage) pour étiqueter un même objet multimédia préférentiellement de l'utilisateur. Toutefois d'autres règles de cooccurrence peuvent être envisagées et prendre en compte les usages d'autres utilisateurs que l'utilisateur souhaitant étiqueter un objet multimédia.

Ce mode de réalisation permet de proposer à l'utilisateur des étiquettes couramment associées à l'étiquette sélectionnée par l'utilisateur dans les choix passés d'étiquetage réalisés par l'utilisateur. Il permet de tenir compte de l'expérience de l'utilisateur pour lui proposer rapidement un choix d'étiquettes approprié.

Plusieurs types de règles de sélection peuvent être envisagés pour déterminer le premier ensemble de sélection, et la mise à jour du deuxième ensemble après sélection d'une étiquette par l'utilisateur. Ainsi, ladite au moins une règle de sélection prédéterminée peut être choisie parmi :
- une règle sélectionnant des étiquettes définies par défaut ;
- une règle sélectionnant des étiquettes en fonction d'au moins une caractéristique dudit au moins un objet multimédia (ex. présence d'un contenu particulier) ;
- une règle sélectionnant des étiquettes en fonction d'au moins une condition d'acquisition dudit au moins un objet multimédia (ex. date et/ou lieu) ;
- une règle sélectionnant un nombre prédéfini d'étiquettes couramment choisies par l'utilisateur pour étiqueter des objets multimédia ;
- une règle sélectionnant des étiquettes associées entre elles par cooccurrence.

Ces exemples ne sont bien entendu donnés qu'à titre illustratif et aucune limitation n'est attachée au nombre de règles de sélection considéré pour déterminer le premier ensemble d'étiquettes, ni à la nature de ces règles.

Il convient par ailleurs de noter que ladite au moins une règle de sélection appliquée pour sélectionner le premier ensemble d'étiquettes peut être choisie en fonction d'au moins une catégorie sémantique sélectionnée par l'utilisateur. De telles catégories sémantiques sont par exemple les catégories « qui », « quoi », « où ». Le choix préalable d'une telle catégorie par l'utilisateur permet de proposer une sélection d'étiquettes plus pertinentes à l'utilisateur.

Dans un mode particulier de réalisation, l'étape de sélection comprend une étape d'interrogation d'au moins une base de données à l'aide d'une information liée à une condition d'acquisition dudit au moins un objet multimédia.

Cette information est par exemple une information de lieu ou de date d'acquisition dudit au moins un objet multimédia, et la base de données, une base de données répertoriant des points ou des centres d'intérêts en fonction d'une localisation géographique, ou un calendrier ou un agenda de l'utilisateur.

Dans un mode particulier de réalisation, le procédé d'étiquetage comprend en outre une étape d'étiquetage dudit au moins un objet multimédia avec une étiquette non comprise dans le deuxième ensemble d'étiquettes et sélectionnée par l'utilisateur.

Dans ce mode de réalisation, le dispositif d'étiquetage offre ainsi la possibilité à l'utilisateur de saisir par lui-même ses propres étiquettes afin d'accélérer encore davantage l'étiquetage de ses objets multimédia et/ou diversifier les étiquettes disponibles.

Dans un mode particulier de réalisation, lorsque ledit au moins un objet multimédia comprend une pluralité d'objets multimédia, l'étape de détermination du premier ensemble d'étiquettes comprend l'application d'au moins une règle sélectionnant des étiquettes en fonction d'une caractéristique dérivée d'une condition d'acquisition de chaque objet de la pluralité d'objets multimédia.

A titre d'exemple, lorsque l'utilisateur désire étiqueter simultanément plusieurs photographies pour lesquelles on dispose des coordonnées GPS des lieux où ces photographies ont été prises, cette caractéristique peut être par exemple le barycentre des coordonnées GPS associées à toutes les photographies considérées.

Bien entendu, cet exemple n'est donné qu'à titre illustratif et n'est en aucun cas limitatif de l'invention.

Dans un mode particulier de réalisation, les différentes étapes du procédé d'étiquetage sont déterminées par des instructions de programmes d'ordinateurs.

En conséquence, l'invention vise aussi un programme d'ordinateur sur un support d'informations, ce programme étant susceptible d'être mis en oeuvre dans un dispositif de d'étiquetage ou plus généralement dans un ordinateur, ce programme comportant des instructions adaptées à la mise en oeuvre des étapes d'un procédé d'étiquetage tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

On peut également envisager, dans d'autres modes de réalisation, que le procédé et le dispositif d'étiquetage selon l'invention présentent en combinaison tout ou partie des caractéristiques précitées.

### Brève description des dessins

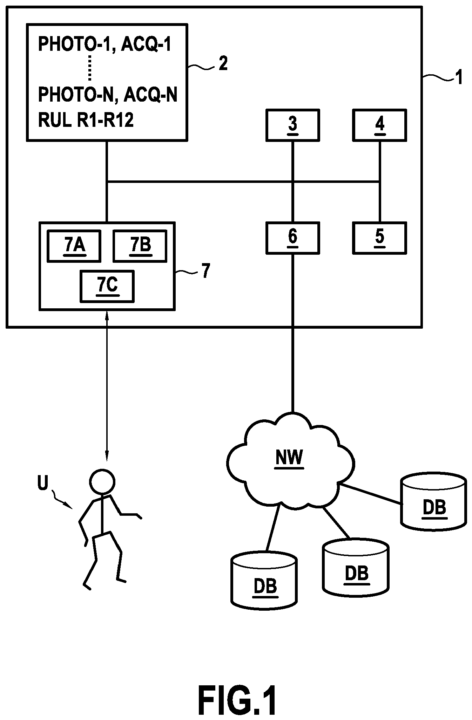

D'autres caractéristiques et avantages de la présente invention ressortiront de la description faite ci-dessous, en référence aux dessins annexés qui en illustrent des exemples de réalisation dépourvus de tout caractère limitatif. Sur les figures :
- le figure 1 représente un dispositif d'étiquetage conforme à l'invention dans un mode particulier de réalisation ;
- la figure 2 illustre, sous forme d'ordinogramme, les principales étapes d'un procédé d'étiquetage selon l'invention, telle que mise en oeuvre par le dispositif d'étiquetage de la figure 1 ; et
- les figures 3A, 3B et 3C illustrent des exemples d'ensembles d'étiquettes suggérés par le dispositif d'étiquetage de la figure 1.

### Description détaillée de l'invention

La **figure 1** représente, dans son environnement, un dispositif d'étiquetage 1 d'objets multimédia appartenant à un utilisateur U, conforme à l'invention, dans un mode particulier de réalisation.

Dans l'exemple envisagé à la figure 1, les objets multimédia que souhaite étiqueter l'utilisateur U sont des fichiers images stockés dans une mémoire non volatile 2 du dispositif d'étiquetage. Il s'agit plus particulièrement de photographies PHOTO-1, PHOTO-2,..., PHOTO-N, où N désigne un nombre entier supérieur ou égal à 1, qui ont été acquises respectivement dans des conditions d'acquisition ACQ-1, ACQ-2,..., ACQ-N. Ces conditions d'acquisition sont inclues ici dans des données au format EXIF (EXchangeable Image File) incorporées dans les fichiers images PHOTO-1, PHOTO-2,..., PHOTO-N. Elles comprennent notamment des informations sur la date et l'heure d'acquisition de la photographie (i.e. prise de vue de la photographie concernée), les réglages de l'appareil photographique utilisé pour prendre cette photographie, des informations de localisation géographique provenant par exemple d'une puce GPS équipant l'appareil photographique telles que les coordonnées GPS du lieu d'acquisition de la photographie (i.e. position du photographe, orientation,...), etc.

En variante, les conditions d'acquisition des photographies PHOTO-1, PHOTO-2,..., PHOTO-N peuvent être enregistrées dans une base de données locale ou distante.

Il convient de noter qu'aucune limitation n'est attachée au type d'objets multimédia que souhaite étiqueter l'utilisateur U, ni à l'espace de stockage où sont stockés ces objets multimédia. L'invention s'applique à d'autres objets multimédia tels que par exemple des fichiers audio et/ou vidéo, des fichiers textes, etc., ainsi qu'à d'autres données relatives aux conditions d'acquisition de ces objets multimédia. Par ailleurs, ces objets multimédia peuvent être stockés dans d'autres espaces de stockage qu'un ordinateur, comme par exemple sur un serveur, un terminal mobile, etc.

Pour réaliser l'étiquetage de ses objets multimédia, l'utilisateur U est assisté par le dispositif d'étiquetage 1 qui, conformément à l'invention, lui suggère une liste d'étiquettes judicieusement choisies, et affine cette suggestion au fil d'interactions avec l'utilisateur U. La liste d'étiquettes proposée à l'utilisateur U et sa mise à jour sont établies en fonction de règles de sélection RUL prédéterminées et configurables, stockées en mémoire du dispositif d'étiquetage par exemple dans une mémoire non volatile. Des exemples de telles règles de sélection RUL sont par exemple :
- une règle R1 sélectionnant une liste comprenant un nombre prédéfini K1 d'étiquettes définies par défaut, configurables par exemple par l'utilisateur. Des exemples d'étiquettes pouvant appartenir à cette liste sont : « art », « paysage », « famille », « vacances », etc. ;
- une règle R2 sélectionnant, pour une étiquette donnée, un hyperonyme de cette étiquette. Comme mentionné précédemment, un hyperonyme d'une étiquette A est une étiquette B d'un niveau sémantique supérieur, autrement dit, un terme générique dont le sens inclut celui de l'étiquette A. Ainsi, par exemple, la règle R2 sélectionne l'étiquette « Monuments » s'il est déterminé qu'il existe des points d'intérêt de type monuments (ex. une église E, une statue S, un temple T, etc.) à proximité du lieu d'acquisition de l'objet à étiqueter (lieu de la prise de vue pour une photographie, autrement dit, position du photographe). De façon similaire, la règle R2 sélectionne l'étiquette « Parc » s'il est déterminé qu'il existe des points d'intérêt de type parcs (ex. un parc P) à proximité du lieu d'acquisition de l'objet à étiqueter, et l'étiquette « Bar » s'il est déterminé qu'il existe des points d'intérêt de type bars (ex. un bar B) à proximité du lieu d'acquisition de l'objet à étiqueter ;
- une ou plusieurs règles sélectionnant des étiquettes en fonction d'au moins une condition d'acquisition ACQ du ou des objets multimédias à étiqueter. Dans l'exemple considéré ici de l'étiquetage de photographies, on peut envisager notamment :
   ∘ une règle R6 sélectionnant comme étiquette, l'adresse du lieu d'acquisition de l'objet à étiqueter. Les différents champs de l'adresse (ex. rue, numéro de rue, ville, pays) proposés pour l'étiquette peuvent être configurés, par exemple par l'utilisateur. Cette adresse peut être obtenue par exemple par géocodage inversé (ou « reverse geocoding » en anglais) en interrogeant une base de données cartographique à partir notamment des coordonnées géographiques (ex. coordonnées GPS) du lieu d'acquisition ;
   ∘ une règle R7 sélectionnant comme étiquettes les noms des points d'intérêt les plus proches du lieu d'acquisition de l'objet à étiqueter ;
   ∘ une règle R8 sélectionnant des étiquettes en fonction de la date et/ou de l'heure d'acquisition de l'objet à étiqueter et des événements d'un calendrier de l'utilisateur U correspondant à cette date et/ou heure ;
- une ou plusieurs règles sélectionnant des étiquettes en fonction d'au moins une caractéristique à proprement parler du ou des objets multimédia à étiqueter. Ces caractéristiques sont liées par exemple au contenu de l'objet à étiqueter. Ainsi, dans l'exemple considéré ici de l'étiquetage de photographies, on peut envisager notamment :
   ∘ une règle R4 sélectionnant un nombre prédéfini (et configurable) K4 d'étiquettes de la liste constituée de l'union des étiquettes utilisées par l'utilisateur U pour étiqueter des photographies associées à un même événement, ordonnées par ordre décroissant ;
   ∘ une règle R9 sélectionnant une ou plusieurs étiquettes prédéfinies en fonction du nombre de visages détectés sur la photographie à étiqueter. Par exemple : si un visage est détecté « portrait », si un nombre supérieur ou égal à 4 visages est détecté « groupe », etc. ;
   ∘ une règle R10 sélectionnant une ou plusieurs étiquettes parmi une liste de contacts établies par l'utilisateur U ;
- une règle R3 sélectionnant un nombre prédéfini (et configurable) K3 d'étiquettes couramment choisies par l'utilisateur pour étiqueter des objets multimédia ;
- une règle R5 sélectionnant des étiquettes associées entre elles par cooccurrence, autrement dit, qui sont avec une probabilité supérieure à un seuil donné utilisées ensemble par l'utilisateur U pour étiqueter des objets multimédia. Cette règle s'appuie sur l'exécution d'un algorithme de cooccurrence connu de l'homme du métier et non détaillé ici ;
- une règle R11 sélectionnant pour une étiquette donnée, une étiquette méronyme de celle-ci. Comme mentionné précédemment, un mot méronyme A d'un mot B est un mot dont le signifié désigne une sous-partie du signifié du mot B. Il convient de noter que cette règle R11 est en quelque sorte la réciproque de la règle R2 et permet, lorsqu'une étiquette hyperonyme B a été sélectionnée conformément à la règle R2 pour une étiquette A, de revenir à l'étiquette A. Ainsi, dans l'exemple envisagé pour la règle R2 de la sélection de l'étiquette hyperonyme « Monuments » à partir de l'étiquette « église E », l'application de la règle R11 permet de sélectionner l'étiquette méronyme « église E » ; et
- une règle R12, utilisée lorsque plusieurs objets multimédia sont à étiqueter simultanément, et qui sélectionne l'ensemble des étiquettes sélectionnées via l'application d'une ou plusieurs règles parmi les règles R1 à R11 pour chaque objet multimédia indépendamment.

Il convient de noter que ces règles peuvent être organisées de manière hiérarchique. Autrement dit, l'application d'une règle peut être conditionnée par la sélection par l'utilisateur U d'une étiquette dérivée d'une autre règle.

Bien entendu, cette liste de règles R1 à R12 n'est pas limitative et d'autres règles de sélection et/ou en nombre différent peuvent être considérées, ces règles pouvant tenir compte du contenu ou d'autres caractéristiques des objets à étiqueter, de l'expérience de l'utilisateur en matière d'étiquetage, des conditions d'acquisition des objets à étiqueter, etc.

Dans le mode de réalisation décrit ici, le dispositif d'étiquetage 1 a l'architecture matérielle d'un ordinateur. Il comprend notamment la mémoire non volatile 2 mentionnée précédemment dans laquelle sont stockées notamment les objets multimédia à étiqueter et les règles de sélection RUL, une mémoire morte 3, une mémoire vive 4, un processeur 5, des moyens de communication 6 sur un réseau de télécommunications NW, des moyens d'entrée/sortie 7 lui permettant d'interagir avec l'utilisateur U, tels que par exemple un écran 7A, un clavier 7B, une souris 7C, etc.

Les moyens de communication 6 comprennent par exemple une carte réseau permettant au dispositif d'étiquetage 1 d'interroger via le réseau public Internet des bases de données externes DB contenant des informations permettant au dispositif d'étiquetage 1 de suggérer des étiquettes pertinentes à l'utilisateur U pour étiqueter ses objets multimédia. Ces bases de données externes DB sont par exemple des bases de points d'intérêt, un calendrier de l'utilisateur U, etc. En variante, au moins l'une des bases de données DB est maintenue en interne par le dispositif d'étiquetage 1 dans l'un de ses mémoires, ou est accessible via un réseau local.

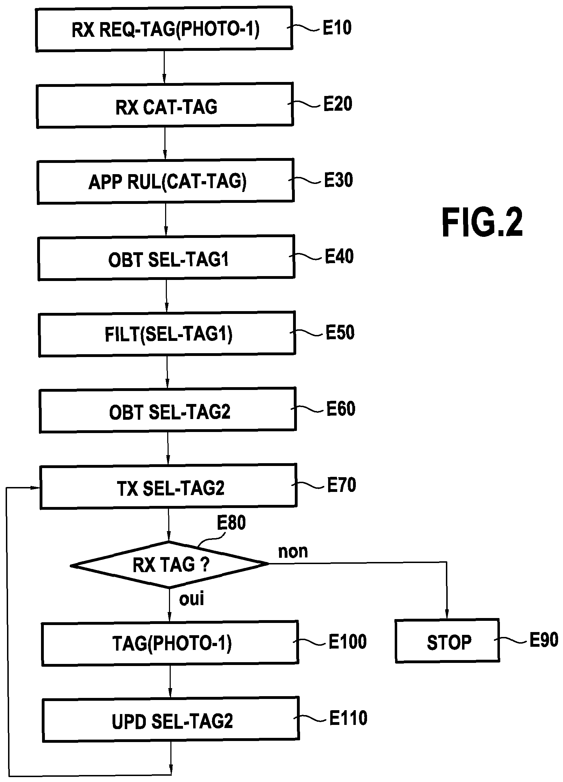

La mémoire morte 3 du dispositif d'étiquetage 1 constitue un support d'enregistrement lisible par le processeur 5 et sur lequel est enregistré un programme d'ordinateur conforme à l'invention, comportant des instructions pour l'exécution des étapes d'un procédé d'étiquetage selon l'invention, les étapes de ce procédé étant décrites ultérieurement en référence à la figure 2 dans un mode particulier de réalisation.

Ce programme d'ordinateur définit de façon équivalente des modules (logiciels) fonctionnels du dispositif d'étiquetage, tels que notamment un module de détermination d'un premier ensemble d'étiquettes pour le ou les objets multimédia à étiqueter selon une ou plusieurs règles de sélection prédéterminées, un module d'obtention d'un deuxième ensemble d'étiquettes à partir du premier ensemble d'étiquettes, un module de fourniture de ce deuxième ensemble d'étiquettes à l'utilisateur (s'appuyant notamment sur les moyens d'entrée/sortie 7), un module d'étiquetage du ou des objets multimédia à étiqueter à l'aide d'une étiquette sélectionnée par l'utilisateur et un module de mise à jour du deuxième ensemble d'étiquettes à partir de l'étiquette sélectionnée. Les fonctions de ces divers modules sont décrites plus en détail en référence aux étapes du procédé d'étiquetage illustrées à la figure 2.

Nous allons maintenant décrire, en référence à la **figure 2**, les principales étapes du procédé d'étiquetage selon l'invention telles que mises en oeuvre par le dispositif d'étiquetage 1 de la figure 1 dans un mode particulier de réalisation.

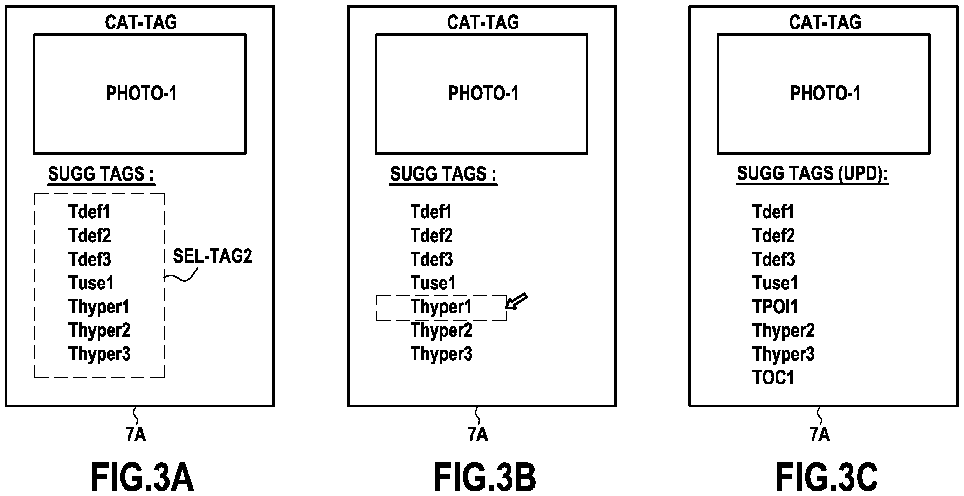

Dans l'exemple envisagé à la figure 2, on suppose que l'utilisateur U souhaite étiqueter une photographie parmi les photographies PHOTO-1, PHOTO-2,..., PHOTO-N stockées sur son ordinateur, par exemple la photographie PHOTO-1 illustrée à la figure 3A. Cette photographie représente un monument, et plus précisément la façade de l'Eglise St Mélaine située à Rennes.

A cette fin, il envoie, par l'intermédiaire des moyens d'entrée/sortie 7, une requête REQ-TAG(PHOTO-1) au dispositif d'étiquetage 1 pour que ce dernier l'assiste dans cette opération, par exemple en lançant une application prévue à cet effet et installée sur son ordinateur et en sélectionnant la photographie PHOTO-1. Comme mentionné précédemment, sur réception de cette requête (étape E10), le dispositif d'étiquetage 1 suggère à l'utilisateur U un ensemble d'étiquettes pour la photographie PHOTO-1 (deuxième ensemble d'étiquettes au sens de l'invention), établi selon des règles de suggestion prédéterminées RUL judicieusement choisies, et met à jour cet ensemble conformément à l'invention au fil de ses interactions avec l'utilisateur U.

Dans le mode de réalisation décrit ici, les règles de suggestion appliquées par le dispositif d'étiquetage 1 pour suggérer des étiquettes ou tags à l'utilisateur U pour étiqueter sa photographie PHOTO-1, diffèrent en fonction d'un découpage sémantique des étiquettes en trois catégories, à savoir :
- une catégorie « qui » destinée plus particulièrement à caractériser qui est représenté sur la photographie,
- une catégorie « quoi » destinée plus particulièrement à caractériser l'objet de la photographie, et
- une catégorie « où » destinée plus particulièrement à définir le lieu de prise de vue de la photographie.

Bien entendu, un découpage sémantique selon d'autres catégories que les catégories qui/quoi/où peut être envisagé en variante.

Ce découpage sémantique en trois catégories facilite la sélection par le dispositif d'étiquetage 1 des étiquettes à suggérer à l'utilisateur U. A titre illustratif, et en référence aux règles R1 à R12 introduites précédemment :
- la catégorie « qui » s'appuie ici sur l'exécution des règles de sélection R1, R2, R5, R9, R10, R11 et R12 si plusieurs objets multimédia sont à étiqueter simultanément ;
- la catégorie « quoi » s'appuie ici sur l'exécution des règles de sélection R1, R2, R3, R5, R7, R11 et R12 si plusieurs objets multimédia sont à étiqueter simultanément ; et
- la catégorie « où » s'appuie ici sur l'exécution des règles de sélection R1, R2, R5, R6, R7, R11 et R12 si plusieurs objets multimédia sont à étiqueter simultanément.

Aucune limitation n'est toutefois attachée à cette répartition qui est donnée à titre illustratif seulement. D'autres règles peuvent être considérées dans chaque catégorie. Les règles associées à chaque catégorie peuvent par ailleurs être configurables, par exemple par l'utilisateur (ex. ajout de la règle R8 s'il souhaite prendre en compte la date et/ou l'heure de l'acquisition de la photographie et les événements correspondants de son agenda).

Il convient de noter que l'application de certaines règles au sein d'une même catégorie sémantique peut dépendre de l'objet multimédia à étiqueter et du résultat d'une analyse notamment de ses caractéristiques et/ou de ses conditions d'acquisition. Ainsi, pour la catégorie « quoi », la règle R7 n'est appliquée que si une analyse de la photographie à étiqueter et/ou de ses conditions de prise de vue permet au dispositif d'étiquetage 1 d'identifier un point d'intérêt à proximité du lieu de prise de vue de la photographie.

En outre, ces règles ne sont pas nécessairement appliquées de façon simultanée par le dispositif d'étiquetage 1. Ainsi par exemple, certaines règles peuvent être appliquées pour déterminer une première sélection d'étiquettes pour l'objet à étiqueter, tandis que d'autres règles peuvent être utilisées pour filtrer cette première sélection de sorte à construire une deuxième sélection d'étiquettes destinée à être présentée à l'utilisateur, et d'autres règles encore peuvent n'être appliquées que lors de la mise à jour de la deuxième sélection d'étiquettes.

Sur réception de la requête REQ-TAG(PHOTO-1) de l'utilisateur U (étape E10), le dispositif d'étiquetage 1 propose tout d'abord à ce dernier de sélectionner une catégorie parmi les trois catégories sémantiques d'étiquettes précitées « qui », « quoi » et « où ». Cette proposition est affichée par exemple sur l'écran 7A du dispositif d'étiquetage 1.

L'utilisateur U sélectionne une catégorie CAT-TAG parmi ces trois catégories sémantiques à l'aide des moyens d'entrée/sortie 7, par exemple, en cliquant à l'aide de sa souris 7C sur la catégorie choisie. A titre illustratif, on suppose qu'il choisit ici la catégorie sémantique CAT-TAG « quoi ».

Sur réception du choix de l'utilisateur U (étape E20), le dispositif d'étiquetage 1 applique les règles de sélection RUL stockées dans sa mémoire non volatile 2, associées à la catégorie CAT-TAG et pertinentes pour la photographie PHOTO-1 pour déterminer un premier ensemble d'étiquettes (étape E30).

Plus précisément ici, le dispositif d'étiquetage 1 analyse dans un premier temps les conditions d'acquisition ACQ-1 mémorisées dans les données EXIF de la photographie PHOTO-1 afin d'identifier s'il existe des points d'intérêt connus à proximité du lieu de prise de vue de la photographie PHOTO-1. A cet effet, il interroge ici, via le réseau de télécommunications Internet NW et ses moyens de communication 6 sur ce réseau, une base de données DB distante répertoriant divers points d'intérêt, à l'aide des coordonnées géographiques du lieu de prise de vue de la photographie PHOTO-1 contenues dans les données ACQ-1.

On suppose ici que la base DB indique en réponse au dispositif d'étiquetage 1 qu'il existe à proximité des coordonnées géographiques du lieu de prise de vue de la photographie PHOTO-1 trois points d'intérêt, à savoir :
- l'Eglise St Mélaine,
- un parc P, et
- un bar B.

Sur réception de la réponse de la base DB, le dispositif d'étiquetage 1 détermine un premier ensemble d'étiquettes SEL-TAG1 pour la photographie PHOTO-1 en appliquant les règles de sélection R1, R3, R5 et R7, la règle R12 n'étant pas pertinente dans l'exemple envisagé (une seule photographie à étiqueter). On suppose à titre illustratif ici que :
- la liste d'étiquettes définie par défaut par la règle R1 comprend K1=3 étiquettes Tdef1= « paysage », Tdef2= « groupe » et Tdef3= « Rennes » ; et
- la règle R3 sélectionne un nombre K3=1 étiquette couramment choisie par l'utilisateur U à savoir l'étiquette Tuse1= « vacances ».

Par ailleurs, la règle R7 sélectionne, à partir de la réponse de la base externe DB, les étiquettes TPOI1= « Eglise St Mélaine », TPOI2= « Parc », TPOI3= « B ».

On suppose ici que l'application de la règle R5 ne permet pas de sélectionner d'autres étiquettes par cooccurrence.

Dans une autre variante de réalisation, si la règle R8 est appliquée, le dispositif d'étiquetage 1 peut être amené à interroger une autre base de données externe DB ou hébergée par l'ordinateur lui-même de l'utilisateur U à partir des informations concernant la date d'acquisition de la photographie PHOTO-1. Cette autre base de données est par exemple un agenda électronique de l'utilisateur U.

Le premier ensemble d'étiquettes SEL-TAG1 obtenu par le dispositif d'étiquetage 1 (via son module fonctionnel de détermination) comprend donc les 7 étiquettes Tdef1= « paysage », Tdef2= « groupe », Tdef3= « noël », Tusel= « vacances », TPOI1= « Eglise St Mélaine », TPOI2= « P » et TPOI3= « B » précitées.

Conformément à l'invention, plutôt que de fournir l'ensemble d'étiquettes SEL-TAG1 tel quel à l'utilisateur U, le dispositif d'étiquetage 1 filtre les étiquettes du premier ensemble pour obtenir un deuxième ensemble d'étiquettes SEL-TAG2 de niveau sémantique supérieur (étape E40). Cette opération de filtrage permet de juger de la pertinence des étiquettes du premier ensemble pour l'étiquetage en cours. En effet, la photographie PHOTO-1 peut représenter un visage par exemple et n'être en aucun cas en relation avec un point d'intérêt rendant ainsi non pertinentes les étiquettes TPOI1, TPOI2 et TPOI3 pour l'utilisateur.

Pour réaliser ce filtrage, le dispositif d'étiquetage 1, par l'intermédiaire de son module fonctionnel d'obtention, applique la règle de sélection R2 (étape E50). Celle-ci sélectionne respectivement pour les étiquettes TPOI1, TPOI2 et TPOI3, les étiquettes hyperonymes Thyper1= « monuments », Thyper2= « parc » et Thyper3= « bar ». Le nouvel ensemble d'étiquettes SEL-TAG2 ainsi obtenu comprend alors les 7 étiquettes Tdef1= « paysage », Tdef2= « groupe », Tdef3= « noël », Tuse1= « vacances », Thyper1= « monuments », Thyper2= « parc » et Thyper3= « bar » précitées (étape E60).

En variante, une même étiquette hyperonyme peut être sélectionnée par le dispositif d'étiquetage pour une pluralité d'étiquettes du premier ensemble SEL-TAG1.

Il convient de noter que la sélection d'une étiquette hyperonyme par la règle R2 dépend bien entendu des étiquettes du premier ensemble et de la définition de la règle R2 dont l'application peut être restreinte à un sous-ensemble seulement d'étiquettes.

Le dispositif d'étiquetage 1 fournit alors le deuxième ensemble d'étiquettes SEL-TAG2 ainsi obtenu à l'utilisateur U, par le biais de ses moyens d'entrée/sortie 7 (étape E70). Plus précisément ici, le deuxième ensemble d'étiquettes SEL-TAG2 est affiché sur l'écran 7A du dispositif d'étiquetage 1, comme illustré à la **figure 3A****.**

Si l'utilisateur U n'a sélectionné aucune étiquette à l'issue d'un laps de temps prédéterminé (que ce soit parmi le deuxième ensemble d'étiquettes SEL-TAG2, ou une étiquette saisie spontanément par l'utilisateur) (réponse non à l'étape test E80), le dispositif d'étiquetage 1 met fin au procédé d'étiquetage et n'associe aucune étiquette à la photographie PHOTO-1 (étape E90).

On suppose ici que l'utilisateur U sélectionne une étiquette parmi le deuxième ensemble d'étiquettes SEL-TAG2 qui lui est proposé (réponse oui à l'étape test E80), via les moyens d'entrée/sortie 7 du dispositif d'étiquetage 1 et plus précisément à l'aide de sa souris 7C. L'étiquette sélectionnée par l'utilisateur U est par exemple ici l'étiquette Thyper1= « monuments » comme illustré à la **figure 3B****.**

Suite à la réception de l'étiquette sélectionnée par l'utilisateur U, le dispositif d'étiquetage 1 étiquette la photographie PHOTO-1 avec l'étiquette Thyper1, via son module fonctionnel d'étiquetage (étape E100). En d'autres mots, il associe à la photographie PHOTO-1 l'étiquette (ou le tag) Thyper1.

Dans l'exemple envisagé ici, l'étiquette utilisée par le dispositif d'étiquetage 1 pour étiqueter la photographie PHOTO-1 est sélectionnée par l'utilisateur U parmi le deuxième ensemble SEL-TAG2 fourni par le dispositif d'étiquetage 1. Toutefois, dans un autre mode de réalisation, l'utilisateur U peut fournir, via par exemple les moyens d'entrée/sortie 7, une étiquette au dispositif d'étiquetage 1 non comprise dans le deuxième ensemble SEL-TAG2.

Le dispositif d'étiquetage 1 met ensuite à jour (par l'intermédiaire de son module fonctionnel de mise à jour) le deuxième ensemble SEL-TAG2 en fonction de l'étiquette Thyper1 sélectionnée par l'utilisateur U (étape E110). Dans l'exemple envisagé ici, cette mise à jour est réalisée en appliquant les règles de sélection R5 et R11.

Plus précisément, conformément à la règle R11, le dispositif d'étiquetage remplace l'étiquette sélectionnée Thyper1 sélectionnée par une étiquette méronyme de l'étiquette Thyper1, à savoir ici l'étiquette TPOI1 = « Eglise St Mélaine ».

En outre, on suppose à titre illustratif que l'application de la règle de sélection R5 permet au dispositif d'étiquetage 1 d'identifier une nouvelle étiquette associée par cooccurrence à l'étiquette Thyper1 sélectionnée, à savoir l'étiquette TOC1=« façade ». Cette étiquette est ajoutée par le dispositif d'étiquetage 1 au deuxième ensemble d'étiquettes SEL-TAG2.

A l'issue de la mise à jour réalisée par le dispositif d'étiquetage 1, celui-ci dispose donc d'un deuxième ensemble d'étiquettes SEL-TAG2 contenant les étiquettes Tdef1= « paysage », Tdef2= « groupe », Tdef3= « noël », Tusel= « vacances », TPOI1= « Eglise St Mélaine », Thyper2= « parc », Thyper3= « bar » et TOC1=« façade ».

L'ensemble SEL-TAG2 ainsi mis à jour est fourni à l'utilisateur U, via les moyens d'entrée/sortie 7, comme décrit précédemment pour l'étape E70 et illustré à la **figure 3C****.** Les étapes E80 à E110 sont ensuite répétées à chaque nouvelle sélection d'une étiquette par l'utilisateur U.

Par ailleurs les étapes E10 à E110 peuvent être réitérées pour chaque nouvel objet multimédia que l'utilisateur U souhaite étiqueter.

Dans le mode de réalisation décrit ici, l'utilisateur U ne souhaite étiqueter qu'un objet multimédia à la fois. En variante, l'utilisateur U peut étiqueter plusieurs objets simultanément avec les mêmes étiquettes.

La règle R12 peut alors être appliquée à cet effet par le dispositif d'étiquetage 1. Plus précisément, conformément à cette règle, le dispositif d'étiquetage élabore un ensemble d'étiquettes à partir de l'union des ensembles d'étiquettes déterminés pour chaque objet multimédia à étiqueter indépendamment.

En variante, le dispositif d'étiquetage 1 peut appliquer certaines règles de sélection en fonction d'une caractéristique dérivée d'une condition d'acquisition de chaque objet de la pluralité d'objets multimédia à étiqueter. A titre d'exemple, pour une pluralité de photographies à étiqueter PHOTO-1,...,PHOTO-N), le dispositif d'étiquetage 1 peut calculer le barycentre des positions géographiques des lieux d'acquisition de ces photographies (à partir des données d'acquisition ACQ-1,...,ACQ-N) et interroger la base de données externe DB à partir de ce barycentre. Les points d'intérêt identifiés par la base de données externe DB à proximité de ce barycentre envoyés par la base DB au dispositif d'étiquetage 1 sont ensuite pris en compte pour déterminer le premier ensemble d'étiquettes.

Dans le mode de réalisation décrit ici, un découpage sémantique des étiquettes selon trois catégories qui/quoi/où a été envisagé de sorte à faciliter notamment la sélection par le dispositif d'étiquetage 1 des étiquettes à suggérer à l'utilisateur. Dans un autre mode de réalisation, aucun découpage sémantique n'est proposé par le dispositif d'étiquetage 1 à l'utilisateur. Le dispositif d'étiquetage 1 suggère alors à l'utilisateur des étiquettes appartenant aux trois catégories sémantiques qui/quoi/où. Ces suggestions peuvent être livrées à l'utilisateur mélangées ou ordonnées, par exemple en respectant le découpage sémantique qui/quoi/où.

Dans le mode de réalisation décrit ici, le dispositif d'étiquetage 1 est localisé ou confondu avec l'ordinateur de l'utilisateur U. En variante, le dispositif d'étiquetage 1 peut être localisé dans un serveur distant avec lequel l'utilisateur U interagit via un terminal tel qu'un ordinateur par exemple. Dans une autre variante encore, le dispositif d'étiquetage 1 peut être localisé dans un autre type de terminal de l'utilisateur U, tel que par exemple un terminal mobile. Il peut s'agir notamment d'une application logicielle installée sur le terminal de l'utilisateur U et bénéficiant de ses moyens matériels (modules d'entrée/sortie, processeur, etc.).

## Revendications

1. Procédé d'étiquetage d'au moins un objet multimédia d'un utilisateur (U) comprenant :
- une étape (E40) de détermination automatique d'un premier ensemble d'étiquettes pour ledit au moins un objet multimédia en appliquant (E30) au moins une règle de sélection prédéterminée ;
- une étape (E60) d'obtention d'un deuxième ensemble d'étiquettes pour ledit au moins un objet multimédia à partir dudit premier ensemble d'étiquettes dans lequel au moins une étiquette est un hyperonyme d'au moins une étiquette du premier ensemble remplaçant dans le deuxième ensemble d'étiquettes ladite au moins une étiquette du premier ensemble ;
- une étape (E70) de fourniture du deuxième ensemble d'étiquettes à l'utilisateur ;
- si une étiquette (E80) est sélectionnée par l'utilisateur :
∘ une étape (E100) d'étiquetage dudit au moins un objet multimédia avec l'étiquette sélectionnée ; et
∘ une étape (E110) de mise à jour du deuxième ensemble d'étiquettes en fonction de l'étiquette sélectionnée par l'utilisateur, ladite mise à jour (E110) comprenant un remplacement de l'étiquette sélectionnée par au moins une étiquette méronyme de l'étiquette sélectionnée ;
les étapes de fourniture, et le cas échéant d'étiquetage et de mise à jour étant répétées avec le deuxième ensemble d'étiquettes mis à jour.

2. Procédé selon la revendication 1 dans lequel l'étape (E100) de mise à jour du deuxième ensemble comprend l'ajout d'au moins une étiquette liée par une règle de cooccurrence à l'étiquette sélectionnée.

3. Procédé selon l'une quelconque des revendications 1 à 2 dans lequel ladite au moins une règle de sélection prédéterminée est choisie parmi :
- une règle sélectionnant des étiquettes définies par défaut ;
- une règle sélectionnant des étiquettes en fonction d'au moins une caractéristique dudit au moins un objet multimédia ;
- une règle sélectionnant des étiquettes en fonction d'au moins une condition d'acquisition dudit au moins un objet multimédia ;
- une règle sélectionnant un nombre prédéfini d'étiquettes couramment choisies par l'utilisateur pour étiqueter des objets multimédia ;
- une règle sélectionnant des étiquettes associées entre elles par cooccurrence.

4. Procédé selon l'une quelconque des revendications 1 à 3 dans lequel l'étape (E40) de détermination comprend une étape d'interrogation d'au moins une base de données (DB) à l'aide d'une information liée à une condition d'acquisition dudit au moins un objet multimédia.

5. Procédé selon la revendication 4 dans lequel l'information utilisée pour interroger la base de données est une information de lieu ou de date d'acquisition dudit au moins un objet multimédia.

6. Procédé selon l'une quelconque des revendications 1 à 5 dans lequel ladite au moins une règle de sélection appliquée pour déterminer le premier ensemble d'étiquettes est choisie en fonction d'au moins une catégorie sémantique sélectionnée par l'utilisateur.

7. Procédé selon l'une quelconque des revendications 1 à 6 comprenant en outre une étape d'étiquetage dudit au moins un objet multimédia avec une étiquette non comprise dans le deuxième ensemble d'étiquettes sélectionnée par l'utilisateur.

8. Procédé selon l'une quelconque des revendications 1 à 7, dans lequel, lorsque ledit au moins un objet multimédia comprend une pluralité d'objets multimédia, l'étape de détermination du premier ensemble d'étiquettes comprend l'application d'au moins une règle sélectionnant des étiquettes en fonction d'une caractéristique dérivée d'une condition d'acquisition de chaque objet de la pluralité d'objets multimédia.

9. Programme d'ordinateur comportant des instructions pour l'exécution des étapes du procédé d'étiquetage selon l'une quelconque des revendications 1 à 8 lorsque ledit programme est exécuté par un ordinateur.

10. Support d'enregistrement lisible par un ordinateur sur lequel est enregistré un programme d'ordinateur comprenant des instructions pour l'exécution des étapes du procédé d'étiquetage selon l'une quelconque des revendications 1 à 8.

11. Dispositif d'étiquetage (1) d'au moins un objet multimédia d'un utilisateur (U) comprenant :
- un module de détermination automatique d'un premier ensemble d'étiquettes pour ledit au moins un objet multimédia apte à appliquer au moins une règle de sélection prédéterminée ;
- un module d'obtention d'un deuxième ensemble d'étiquettes pour ledit au moins un objet multimédia à partir dudit premier ensemble d'étiquettes dans lequel au moins une étiquette est un hyperonyme d'au moins une étiquette du premier ensemble remplaçant dans le deuxième ensemble d'étiquettes ladite au moins une étiquette du premier ensemble ;
- un module de fourniture du deuxième ensemble d'étiquettes à l'utilisateur ;
- des modules, activés si une étiquette est sélectionnée par l'utilisateur, d'étiquetage dudit au moins un objet multimédia avec l'étiquette sélectionnée par l'utilisateur et de mise à jour du deuxième ensemble d'étiquettes en fonction de cette étiquette, ladite mise à jour comprenant un remplacement de l'étiquette sélectionnée par au moins une étiquette méronyme de l'étiquette sélectionnée ;
et dans lequel les modules de fourniture, et le cas échéant d'étiquetage et de mise à jour sont utilisés de manière répétée avec le deuxième ensemble d'étiquettes mis à jour.

## Patentansprüche

1. Verfahren zur Etikettierung mindestens eines Multimediaobjekts eines Benutzers (U), umfassend:
- einen Schritt (E40) des automatischen Bestimmens eines ersten Satzes von Etiketten für das mindestens eine Multimediaobjekt durch Anwendung (E30) mindestens einer vorbestimmten Auswahlregel;
- einen Schritt (E60) des Erhaltens eines zweiten Satzes von Etiketten für das mindestens eine Multimediaobjekt anhand des ersten Satzes von Etiketten, wobei mindestens ein Etikett ein Hyperonym mindestens eines Etiketts des ersten Satzes ist, das in dem zweiten Satz von Etiketten das mindestens eine Etikett des ersten Satzes ersetzt;
- einen Schritt (E70) des Bereitstellens des zweiten Satzes von Etiketten an den Benutzer;
- wenn ein Etikett (E80) von dem Benutzer ausgewählt wird:
∘ einen Schritt (E100) des Etikettierens des mindestens einen Multimediaobjekts mit dem ausgewählten Etikett; und
∘ einen Schritt (E110) des Aktualisierens des zweiten Satzes von Etiketten in Abhängigkeit von dem Etikett, das vom Benutzer ausgewählt wird, das Aktualisieren (E110) umfassend ein Ersetzen des ausgewählten Etiketts durch mindestens ein Etikett, das ein Meronym des ausgewählten Etiketts ist;
wobei die Schritte des Bereitstellens, und wo zutreffend des Etikettierens und des Aktualisierens, mit dem zweiten Satz von Etiketten, der aktualisiert ist, wiederholt wird.

2. Verfahren nach Anspruch 1, wobei der Schritt (E100) des Aktualisierens des zweiten Satzes das Hinzufügen mindestens eines Etiketts umfasst, das durch eine Kookkurenzregel mit dem ausgewählten Etikett verbunden ist.

3. Verfahren nach einem der Ansprüche 1 bis 2, wobei die mindestens eine vorbestimmte Auswahlregel aus den folgenden ausgewählt wird:
- eine Regel, die Etiketten auswählt, die standardmäßig definiert sind;
- eine Regel, die Etiketten in Abhängigkeit von mindestens einem Merkmal des mindestens einen Multimediaobjekts auswählt;
- eine Regel, die Etiketten in Abhängigkeit von mindestens einer Erfassungsbedingung des mindestens einen Multimediaobjekts auswählt;
- eine Regel, die eine vorgegebene Anzahl von Etiketten auswählt, die häufig von dem Benutzer gewählt werden, um Multimediaobjekte zu etikettieren;
- eine Regel, die Etiketten auswählt, die durch Kookkurenz miteinander in Verbindung stehen.

4. Verfahren nach einem der Ansprüche 1 bis 3, wobei der Schritt (E40) des Bestimmens einen Schritt des Abfragens mindestens einer Datenbank (DB) mithilfe einer Information umfasst, die mit einer Erfassungsbedingung des mindestens einen Multimediaobjekts verbunden ist.

5. Verfahren nach Anspruch 4, wobei die Information, die genutzt wird, um die Datenbank abzufragen, eine Orts- oder Erfassungsdatumsinformation des mindestens einen Multimediaobjekts ist.

6. Verfahren nach einem der Ansprüche 1 bis 5, wobei die mindestens eine Auswahlregel, die angewandt wird, um den ersten Satz von Etiketten zu bestimmen, in Abhängigkeit von mindestens einer semantischen Kategorie gewählt wird, die vom Benutzer ausgewählt wird.

7. Verfahren nach einem der Ansprüche 1 bis 6, ferner umfassend einen Schritt des Etikettierens des mindestens einen Multimediaobjekts mit einem Etikett, das nicht in dem zweiten Satz von Etiketten enthalten ist, das vom Benutzer ausgewählt wird.

8. Verfahren nach einem der Ansprüche 1 bis 7, wobei, wenn das mindestens eine Multimediaobjekt eine Mehrzahl von Multimediaobjekten umfasst, der Schritt des Bestimmens des ersten Satzes von Etiketten das Anwenden mindestens einer Regel umfasst, die Etiketten in Abhängigkeit von einem Merkmal auswählt, das von einer Erfassungsbedingung jedes Objekts der Mehrzahl von Multimediaobjekten abgeleitet ist.

9. Computerprogramm, aufweisend Anweisungen für die Ausführung der Schritte des Etikettierungsverfahrens nach einem der Ansprüche 1 bis 8, wenn das Programm von einem Computer ausgeführt wird.

10. Computerlesbares Speichermedium, auf dem ein Computerprogramm gespeichert ist, das Anweisungen für die Ausführung der Schritte des Etikettierungsverfahrens nach einem der Ansprüche 1 bis 8 umfasst.

11. Vorrichtung zur Etikettierung (1) mindestens eines Multimediaobjekts eines Benutzers (U), umfassend:
- ein Modul zum automatischen Bestimmen eines ersten Satzes von Etiketten für das mindestens eine Multimediaobjekt, das geeignet ist, mindestens eine vorbestimmte Auswahlregel anzuwenden;
- ein Modul zum Erhalten eines zweiten Satzes von Etiketten für das mindestens eine Multimediaobjekt anhand des ersten Satzes von Etiketten, wobei mindestens ein Etikett ein Hyperonym mindestens eines Etiketts des ersten Satzes ist, das in dem zweiten Satz von Etiketten das mindestens eine Etikett des ersten Satzes ersetzt;
- ein Modul zum Bereitstellen des zweiten Satzes von Etiketten an den Benutzer;
- Module, die aktiviert werden, wenn ein Etikett vom Benutzer ausgewählt wird, zum Etikettieren des mindestens einen Multimediaobjekts mit dem Etikett, das vom Benutzer ausgewählt wird, und zum Aktualisieren des zweiten Satzes von Etiketten in Abhängigkeit von diesem Etikett, das Aktualisieren umfassend ein Ersetzen des ausgewählten Etiketts durch mindestens ein Etikett, das ein Meronym des ausgewählten Etiketts ist;
und wobei die Module zum Bereitstellen und wo zutreffend zum Etikettieren und zum Aktualisieren wiederholt mit dem aktualisierten zweiten Satz von Etiketten genutzt werden.

## Claims

1. Method for tagging at least one multimedia object of a user (U), comprising:
- a step (E40) of automatically determining a first set of tags for said at least one multimedia object by applying (E30) at least one predetermined selection rule;
- a step (E60) of obtaining a second set of tags for said at least one multimedia object on the basis of said first set of tags in which at least one tag is a hyperonym of at least one tag of the first set replacing, in the second set of tags, said at least one tag of the first set;
- a step (E70) of providing the user with the second set of tags;
- if a tag (E80) is selected by the user:
∘ a step (E100) of tagging said at least one multimedia object with the selected tag; and
∘ a step (E110) of updating the second set of tags according to the tag selected by the user, said updating step (E110) comprising an operation of replacing the selected tag with at least one tag that is a meronym of the selected tag;
the providing and, if applicable, tagging and updating steps being repeated with the updated second set of tags.

2. Method according to Claim 1, wherein the step (E100) of updating the second set comprises the addition of at least one tag that is related to the selected tag by a co-occurrence rule.

3. Method according to either of Claims 1 and 2, wherein said at least one predetermined selection rule is chosen from:
- a rule selecting defined tags by default;
- a rule selecting tags according to at least one characteristic of said at least one multimedia object;
- a rule selecting tags according to at least one condition of acquisition of said at least one multimedia object;
- a rule selecting a predefined number of tags commonly chosen by the user to tag multimedia objects;
- a rule selecting tags that are associated with one another by co-occurrence.

4. Method according to any one of Claims 1 to 3, wherein the determining step (E40) comprises a step of querying at least one database (DB) using information related to a condition of acquisition of said at least one multimedia object.

5. Method according to Claim 4, wherein the information used to query the database is information on the place or date of acquisition of said at least one multimedia object.

6. Method according to any one of Claims 1 to 5, wherein said at least one selection rule applied to determine the first set of tags is chosen according to at least one semantic category selected by the user.

7. Method according to any one of Claims 1 to 6, further comprising a step of tagging said at least one multimedia object with a tag, which is not included in the second set of tags, selected by the user.

8. Method according to any one of Claims 1 to 7, wherein, when said at least one multimedia object comprises a plurality of multimedia objects, the step of determining the first set of tags comprises the application of at least one rule that selects tags according to a characteristic derived from a condition of acquisition of each object of the plurality of multimedia objects.

9. Computer program including instructions for executing the steps of the tagging method according to any one of Claims 1 to 8 when said program is run by a computer.

10. Recording medium able to be read by a computer on which a computer program comprising instructions for executing the steps of the tagging method according to any one of Claims 1 to 8 is recorded.

11. Device (1) for tagging at least one multimedia object of a user (U), comprising:
- a module for automatically determining a first set of tags for said at least one multimedia object which is capable of applying at least one predetermined selection rule;
- a module for obtaining a second set of tags for said at least one multimedia object on the basis of said first set of tags in which at least one tag is a hyperonym of at least one tag of the first set replacing, in the second set of tags, said at least one tag of the first set;
- a module for providing the user with the second set of tags;
- modules, which are activated if a tag is selected by the user, for tagging said at least one multimedia object with the tag selected by the user and for updating the second set of tags according to this tag, said updating step comprising an operation of replacing the selected tag with at least one tag that is a meronym of the selected tag;
and wherein the use of the providing and, if applicable, tagging and updating modules is repeated with the updated second set of tags.
